# EUROPÄISCHE PATENTANMELDUNG

(11) **EP 2 338 632 A1**
(43) Veröffentlichungstag der Anmeldung: **29.06.2011**
(21) Anmeldenummer: 09015880.9
(22) Anmeldetag: 22.12.2009
(51) Int. Cl.: B23K 20/12

(54) **Reibpunktschweisswerkzeug**

(71) Anmelder: Harms & Wende GmbH & Co. KG, 21079 Hamburg (DE)
(72) Erfinder: Webb, Alexander, 21077 Hamburg (DE); Luidhardt, Fritz, 20355 Hamburg (DE)
(74) Vertreter: Glawe, Delfs, Moll

(57) **Zusammenfassung**

Das Reibpunktschweißwerkzeug zum Verbinden von flächigen Werkstücken (3) an Stellen, an denen sie überlappen, mit einem gegen die Werkstücke drückbaren Stempel (2) und einem darin angeordneten Stift (6) sowie einer denselben konzentrischen umgebenden Hülse (5), die im Stempel (2) unabhängig voneinander axial bewegbar sind, wobei der Stift (6) und/oder die Hülse (5) in Drehung versetzbar sind, zeichnet sich dadurch aus, dass das Reibpunktschweißwerkzeug mit Kanälen und Hohlräumen (8, 9, 10) für Kühlung von Stift (6), Hülse (5) und Stempel (2) mit einer Kühlflüssigkeit versehen ist, die zumindest den Stift (6) und die Hülse (5) direkt ab umspült, und dass maschinenseitige und werkstückseitige Dichtungseinrichtungen (15) vorgesehen sind, durch die das Austreten der Kühlflüssigkeit zwischen Stift (6), Hülse (5) und Stempel (2) zumindest stark behindert wird (Fig. 3).

## Beschreibung

Die Erfindung betrifft ein Reibpunktschweißwerkzeug (RPS-Werkzeug) zum Verbinden von flächigen Werkstücken an Stellen, an denen sie überlappen, mit einem gegen die Werkstücke drückbaren Stempel und einem darin angeordneten Stift sowie einer denselben konzentrischen umgebenden Hülse, die im Stempel unabhängig voneinander axial bewegbar sind, wobei der Stift und/oder die Hülse in Drehung versetzbar sind.

Bei einem bekannten Reibpunktschweißwerkzeug oder RPS-Werkzeug (WO01/36144 A1) wird der Werkzeugkopf, der aus einem Stift und einer diesen umgebenden Hülse besteht die in einem Stempel angeordnet sind, mit einem genau definierten Druck auf den Verbindungsbereich von zwei oder mehr wenigstens teilweise überlappenden flächigen Werkstücken, insbesondere Blechen, aufgesetzt. Das rotierende Werkzeug erzeugt Reibungswärme und plastifiziert so den Werkstoff. Der rotierende Stift drückt dabei in das Werkstück hinein. Die umgebende Hülse wird gleichzeitig vom Werkstück abgehoben. Dabei entsteht zwischen der Hülse und dem Stempel ein Hohlraum. Dieser nimmt den Werkstoff auf, den der Stift verdrängt. Der Vorgang ist beendet, sobald der Stift eine definierte Tiefe in der untersten Schicht der zu verbindenden Werkstücke erreicht hat. Anschließend wird der Stift aus dem Werkstück hinausgezogen, und die gegenläufig bewegte Hülse drückt den plastischen Werkstoff wieder in den Verbindungsbereich zurück. Das Ergebnis ist eine punktförmige und stoffschlüssige Verbindung hoher Qualität. Die Verbindungsstelle bildet eine im Wesentlichen glatte Oberfläche.

Es ist aber auch möglich, die Hülse in das Werkstück eindringen zu lassen, wobei dann der Stempel ausweicht, um Raum für das Material zu schaffen, das dann in den entstehenden Leeraum durch den Stempel zurück gedrückt wird, wenn die Hülse zurückgezogen wird.

Wenn das Werkstück nicht auf einer festen Unterlage liegt, muss ein Gegenhalter vorgesehen werden, um dem Druck des Reibpunktschweißwerkzeugs aufzunehmen.

Das bekannte Reibpunktschweißwerkzeug hat aber den Nachteil, dass in die drehachsen-konzentrischen Ringspalte, prinzipbedingt, Werkstückmaterial eindringt. Das führt zum Verkleben von Stift mit Hülse und/oder Hülse mit Stempel, was erheblichen Kraft- und Drehmomentanstieg in der Maschine bewirkt und zu erheblich verkürzter Lebensdauer oder Bruch von Maschinenteilen führt. Die Antriebe und lastaufnehmenden Bauteile müssen entsprechend überdimensioniert und damit unnötig groß und teuer sein. Es ist Dauerrotation der Werkzeuge zwecks dauernder Plastifizierung des eingedrungenen Materials in der Klebzone erforderlich, um die Losbrechkräfte etwas zu vermindern, was aber häufig nicht ausreicht. Weiter besteht die Gefahr des Vordringens von eingedrungenem Material bis zu den ggf. vorhandenen Dichtungen, schließlich Zerstörung der Dichtungen und in Folge weitere Beschädigung der Maschine.

Ein weiteres Problem ist der Verschleiß der Werkzeuge im Kontaktbereich zum Werkstück. Die prinzipbedingte Reibung am Werkstück, insbesondere dessen harte Oxidschicht (Aluminiumlegierungen) und ggf. der hohe Umformwiderstand von Stahl (hoher Energieeintrag erforderlich) und ggf. dessen Oberflächenschicht ergeben Abrasiv- Verschleiß und Kantenausbrüche bei Materialermüdung durch thermomechanischen Stress besonders an den rotierenden Werkzeugen. Bei Verwendung der bisher üblichen Warmarbeitsstähle (als Werkzeugmaterial) werden an Al-Legierungen Temperaturen über 450°C, an Stahl Temperaturen nahe 1000° C an dem in Werkstückkontakt befindlichen Werkzeugende erreicht. Auch das verkürzt die Betriebslebensdauer.

Die Aufgabe der Erfindung besteht in der Schaffung eines Reibpunktschweißwerkzeugs, das eine größere Betriebslebensdauer hat.

Diese Aufgabe wird dadurch gelöst, dass das Reibpunktschweißwerkzeug mit Kanälen und Hohlräumen für Kühlung von Stift, Hülse und Stempel mit einer Kühlflüssigkeit versehen ist, die zumindest den Stift und die Hülse direkt bis möglichst nahe an das werkstückseitige Ende umspült, und dass werkzeugseitige und werkstückseitige Dichtungseinrichtungen vorgesehen sind, durch die das Austreten der Kühlflüssigkeit zwischen Stift, Hülse und Stempel zumindest stark behindert wird.

Durch die Kühlung wird die durch die Reibung erzeugte Wärme teilweise abgeführt, wodurch die Temperatur von Stift, Hülse und Stempel verringert wird. Durch direkte Umspülung von Stift und Hülse werden diese besonders wirkungsvoll gekühlt. Durch die Dichtungseinrichtungen wird andererseits verhindert, dass die Kühlflüssigkeit insbesondere zum Werkstück hin austritt, obwohl ein Austreten einer geringen Flüssigkeitsmenge erwünscht sein kann, um das Werkstück zu kühlen. Wegen der niedrigeren Temperatur von Stift, Hülse und Stempel erstarrt das plastifizierte Material beim Eindringen in die Spalte zwischen Stift, Hülse und Stempel.

Es ergibt sich zwischen Stift und Hülse bzw. zwischen Hülse und Stempel eine deutlich verkleinerte Zone, die durch erstarrtes plastifiziertes Material verklebt wird. Es bildet sich ein im Wesentlichen nur stiftseitig oder hülsenseitig kaum haftender, formschlüssig gehaltener Materialpfropf oder -film, der als Dichtung gegen Eindringen von weiterem Material wirkt. Die Verklebung der Werkzeugkontakt-Paare Stift-Hülse bzw. Hülse-Stempel wird dadurch so sehr minimiert, dass die Losbrechkräfte für die Maschine akzeptabel klein werden und auf Dauerrotation zwecks dauernder Plastifizierung des eingedrungenen Materiales in der Klebzone verzichtet werden kann. Es bildet sich ein Schmier- und Dichtfilm aus Werkstückmasse an den dem Werkstück nächstgelegen relativ heißen Zylinder-Umfangsflächen, wo Werkstückmaterial noch fest anhaftet. Das Werkstückmaterial bildet dort einen im Betrieb plastischen metallischen bzw. (im Falle der Schweißung von thermoplastischem Material) einen thermoplastischen Film. Dieser Film trennt die RPS-Werkzeugteile (Stift, Hülse und Stempel) voneinander und verhindert dadurch deren Zerstörung. Es würde sonst direkte reibende Berührung mit Verschleiß durch örtliche Kaltverschweißung stattfinden. Es sind hinreichend niedrige Temperaturen sogar für die Anwendung an Thermoplast-Werkstücken erreichbar, ohne dass die thermoplastische Masse zu weit in die Werkzeugspalte eindringt.

Das Eindringen von Werkstückmaterial kommt zum Stillstand oder wird so sehr verlangsamt, dass entweder die Dichtungen oder ein Werkzeugteil verschlissen sind, bevor eingedrungenes Werkstückmaterial Dichtungen verletzt oder die Maschinenfunktion und -lebensdauer eingeschränkt wird. Das funktioniert sogar ohne Dauerrotation der Werkzeuge und vermindert Energieaufwand und Reibverschleiß. Die nach ein bis zwei Schweißungen eingedrungene Werkstückmaterialmenge reicht aus, die metallisch reibenden Werkzeugflächen sicher zu trennen und - sobald durch Reibung bei Rotation plastifiziert - zu schmieren.

Reibpunktschweißwerkzeuge der eingangs genannten Art und insbesondere das erfindungsgemäße Reibpunktschweißwerkzeug haben die folgenden Vorteile:
- variabel steuerbare Hubhöhe von Stift und Hülse ermöglichen eine flexible Anpassung der Einreibtiefe (unterschiedliche Blechdicken und Mehrblechverbindungen)
- stoffschlüssiges Fügen unterhalb der Schmelztemperatur
- flüssigkeits- und gasdichte Verbindung
- sehr hohe mechanische Festigkeiten erreichbar
- ebene Ausbildung auf der Oberseite der Verbindung
- keine / kaum Beeinträchtigung der Oberflächengüte der Rückseite
- keine zusätzlichen Verbindungselemente, Zuführeinrichtungen, Schweißzusätze erforderlich
- Herstellen punktförmiger Verbindungen an Leichtmetallen ohne Verbindungselement
- Mischverbindungen und Mehrlagenschweißungen möglich
- große Schweißpunktdurchmesser auch bei geringen Blechstärken
- unterschiedliche Verbindungspunktdurchmesser verfügbar
- Bleche mit Einzeldicke von 0,18 mm bis zu 5,0 mm schweißbar
- Verfahren bei hoher Bauteilsteifigkeit mit einseitiger Zugänglichkeit anwendbar
- unterschiedlichste Schweißgeometrien mit einem Werkzeugsatz schweißbar
- geringe Wärmebelastung, geringe Entfestigung
- keine Begrenzung der Punktzahl (kein minimaler Punktabstand, Nebenschluss)
- geringe Anforderung an die Oberflächenvorbereitung
- gute Schweißeignung für unterschiedliche Blechdicken, Sonderlegierungen und pulvermetallurgisch hergestellte Werkstoffe (PM-A1)

Das Reibpunktschweißwerkzeug hat viele Anwendungsmöglichkeiten:
- Alternative zum Widerstandspunktschweißen und zu mechanischen Verbindungsverfahren für Überlappverbindungen aus Aluminium
- Blechanbindungen an Gussteile
- Mischverbindungen mit Magnesium und anderen Buntmetallen
- Wiederholung von Schweißungen an selber Stelle möglich (Reparaturzwecke)
- Verbindung von Kunststoffteilen, z.B. thermoplastische Einsätze in Thermoforming-(Tiefzieh-)teile

Bei einer vorteilhaften Ausführungsform sind die Dichtungseinrichtungen Ring-Dichtungen. Eine radiale Dichtung zwischen Stift und Hülse sowie Hülse und Stempel kann z.B. als O-Ring, X-Ring oder Nutring oder Stopfbuchspackung, einfach oder mehrfach, ausgebildet und so nahe am Stiftende platziert seien, dass einerseits das in den Ringspalt eindringende Werkstückmaterial die Dichtung nicht erreicht und beschädigt, andererseits die Kühlflüssigkeit für besagte Temperaturabsenkung zwecks Vermeidung von Anhaften von Werkstückmaterial am Werkzeugende hinreichend wirksam wird.

Besonders vorteilhaft sind Nutringe aus PTFE mit eingelagerter Kohle oder aus PTFE mit eingelagertem MoS2 oder aus PTFE mit eingelagertem hexagonalem Bornitrid. Die Nutringe können durch integrierte Feder aus rostfreiem Stahl oder anderem rostfreiem Feder-Material vorgespannt sein.

Eine andere vorteilhafte Ausführung zeichnet sich dadurch aus, dass die Dichtungseinrichtungen Kapillardichtspalte zwischen Stift, Hülse und Stempel aufweisen. Der Kapillarspalt ist dabei vorteilhafterweise so eng und so lang bemessen, dass die Menge der durchsickernden Kühlflüssigkeit, je nach Vorlaufdruck, unter einer für den RPS-Prozess sowie für den Anwender tolerablen Menge pro Zeiteinheit bleibt. Andererseits hilft eine sehr geringe - filmartig bis zum äußeren Ende von Stift und Hülse vordringende - Fluidmenge (0 bis 10 Tropfen), die im Kontakt mit dem Werkstück befindlichen Werkzeugpartien sehr wirksam durch Verdampfung zu kühlen. Die so erniedrigte Werkzeugtemperatur erhöht deutlich die Werkzeuglebensdauer. Besonders für die RPS-Anwendung an Thermoplast-Werkstücken ist eine sehr wirksame Kühlung bis zum werkstücknahen Ende erforderlich und kann mit dem erfindungsgemäßen Reibpunktschweißwerkzeug verwirklicht werden. Der Kühlflüssigkeits - Vorlaufdruck und mindestens ein Schließventil in der Kühlflüssigkeits-Zuführung müssen so gesteuert werden, dass zu keiner Zeit, insbesondere während Maschinenstillstand, unakzeptable Kühlflüssigkeitsmengen austreten. Nötigenfalls kann die Förderrichtung bei Maschinenstillstand in umgekehrte Richtung (saugen) gesteuert werden.

Die Kapillardichtung erlaubt es, den für einen sonst nötigen Dichtring nötigen Einbauraum und entsprechend nötige Ausdrehung, gleichbedeutend mit Querschnittsminderung des Stiftes oder der Hülse, zu vermeiden. Das gewährleistet entscheidend die Torsions-Schwellfestigkeit von Stift oder Hülse (letzteres falls der Dichtring in der Hülse platziert wird). Insbesondere bei zunehmend kleiner geforderten Werkzeugdurchmessern ergibt sich eine technische Grenze für den Dichtring-Querschnitt.

Der dann sehr dünne Dichtring ist zu empfindlich, er neigt (bei axialer Verschiebung von Stift oder Hülse) zum Verdrillen, und sein radialer Federweg und zugehörige Wandbedeckung unter Anpressung reicht nicht mehr aus um dicht zu sein. Würde man den Dichtringquerschnitt immer genügend groß beibehalten, ergäbe sich bei Werkzeugdurchmesser-Verkleinerung der dortige Stiftquerschnitt schließlich zu null. Die Kapillardichtfläche kann, wenn etwas größere Flüssigkeitsaustrittsmenge gewünscht wird, auch eine Vielzahl enger, außen scharfkantiger radialer Umfangsnuten geringer Einstichtiefe enthalten.

Die Kapillardichtung ist eine entscheidende Vorraussetzung dafür, Werkzeugsätze mit sehr kleinen Durchmessern zu verwirklichen. Vorbild für die Kapillardichtung ist die Injektionsspritze alter Bauart (Glas- oder Metallkolben in Glaszylinder).

Bei einer vorteilhaften Ausführungsform sind maschinenseitig doppelte oder im Vergleich zu den werkstückseitigen Dichtungen mehrfache oder sicherere Dichtungen vorgesehen. Die werkstückseitig einfach eingesetzten Dichtungen sollen zuerst versagen, damit dann austretende Kühlflüssigkeit das Dichtungsversagen sichtbar anzeigt, ohne dass die Maschine durch Kühlflüssigkeit gefährdet wird. Es können dann alle Dichtungen im Werkzeugsatz erneuert und der Werkzeugsatz auf Schäden überprüft, nötigenfalls erneuert werden.

Als besonders vorteilhaft hat es sich erwiesen, wenn am werkstückseitigen Ende Ringnuten oder Gewinde am Umfang von Stift und/oder Hülse vorgesehen sind.

Es können einerseits enge Ringnuten mitAußenkanten als Fließwiderstand nahe dem werkstückseitigen Ende angeordnet sein, die außen scharfkantig sind oder mit einem Außenradius oder einer Außenfase von weniger als 0.2 mm versehen sind. Ringnuten oder Gewinde am Umfang von Stift und Hülse fangen in den Ringspalt eindringendes Werkstückmaterial ein, das dort eine weitgehend dichtende Barriere bildet. Ohne Flüssigkeitskühlung ist diese Dichtwirkung unvollständig, das Verkleben der Werkzeugteile und Vordringen von plastifiziertem Material in Richtung Maschine kann nicht ausreichend aufgehalten werden, das Temperaturniveau bleibt dort zu hoch.

Insbesondere am Außenmantel der Hülse, nahe dem Werkstück, können Ringnuten als Gewinde im Sinne einer Förderschnecke eingebracht und verwendet werden. Damit wird, bei vorbestimmter und dazu geeigneter Drehrichtung, dem Eindringen von Werkstückmaterial mit gutem Erfolg entgegenwirkt.

Es können auch breite Ringnuten als Werkstoffmaterial-Sammelkammern vorgesehen seien. Für das wenige, über den erwähnten Pfropfen oder Film hinaus eingedrungene Material können an Stift und Hülse relativ breite Freiräume vorgesehen sein, die, in genügendem Abstand von der nächstliegenden Dichtung, als Material- Sammelkammer dienen. Sie sind so bemessen, dass sie erst beim routinemäßigen WerkzeugWechsel vom Werkstückmaterial befreit (entleert) werden müssen. Außerdem können im Bereich der Sammelkammer im Stempel Bohrungen, radial nach außen zur Umgebung führend, eingebracht sein, durch die Material austreten kann und zugleich Materialansammlung sichtbar wird.

Zweckmäßigerweise sind die werkstückseitigen Enden von Stift und/oder Hülse oberflächenbehandelt.

Reiben am Werkstück und damit Reibverschleiß, Kleben (Anlegieren) von eingedrungenem Werkstück-Material im Ringspalt sowie Korrosionsgefahr an Metalloberflächen in Kontakt mit dem Kühlflüssigkeit erfordern geeigneten Oberflächenschutz. Eingesetzt werden kann zu diesen Zwecken chemisch aufgebrachtes Nickel ohne oder mit eingelagertem hexagonalen BN (Bornitrid) z.B. auf Warmarbeitsstahl.

Wo kein Korrosionsschutz nötig ist aber Verschleißwiderstand gefordert ist kann TiAlN oder ZOX (Zirkonoxid-haltig) aufgebracht werden. Zusätzlich, im Bereich der schleifenden Dichtungen, wo die Betriebstemperatur 300° nicht überschreitet, kann eine DLC-Schicht (diamantartiger Kohlenstoff) als Außenschicht mit dem Ziel aufgebracht werden, die Reibung zu minimieren beziehungsweise die Standzeit der Dichtungen zu maximieren. Es ist möglich und ratsam, nichtschmierfähiger Kühlflüssigkeit (Leitungswasser) geringe Mengen von hexagonalem BN gleichmäßig oder in Schüben beizumischen, um eine Schmierwirkung und damit längere Lebensdauer aller benetzten Dichtungen zu bekommen. Da hexagonales BN wasserabweisend ist, muss es zuvor als wasserlösliche Emulsion angemischt werden, z.B. in Glyzerin oder Polyäthylenglykol.

Alternativ kann ein Depot aus hexagonalem BN allein oder als Gemisch oder Emulsion mit Fett oder Öl in konstruktiv vorgesehenen Kammern vor oder zwischen Dichtungen angelegt werden. Die Menge muss so minimiert werden und der Stofftransport so gestaltet werden, dass keine Verstopfungen im RPS-Kühlsystem auftreten.

Zur Anwendung an Thermoplasten kann eine DLC- Schicht oder eine ZOX- Schicht bis hin zum werkstücknahen Werkzeugende zu starkes Anhaften von Thermoplastmassen und somit auch zu starkes Verkleben des Werkzeugsatzes) vermeiden. Die außerordentlich hohe Härte solcher Schichten ermöglicht genügend Werkzeugstandzeit bei RPS von faserverstärkten Thermoplasten.

Zweckmäßigerweise bestehenden Stift und Hülse, gegebenenfalls auch der Stempel wenigstens teilweise aus Hartmetall oder einem anderen Hartstoff, insbesondere Keramik.

Für RPS- Verbindungen von Werkstücken aus Al-Legierungen mit Stahl-Gegenlage oder von Stahl mit Stahl, wo die Werkzeuge rotierend mit Werkstoffen mit höherem Schmelzpunkt als Al-Legierungen, insbesondere Stahlwerkstoffen, in Kontakt kommen, versagt Warmarbeitsstahl als Werkzeug-Werkstoff sehr schnell.

Stattdessen werden nun Stift und Hülse oder nur die Hülse (wenn sie zuerst in das Werkstück einfährt und es damit für den später eindringenden Stift hinreichen plastifiziert hat) im Bereich des Werkstückkontaktes mit sogenanntem Hartmetall oder, alternativ, CERMET oder einem anderen Hartstoff, insbesondere Keramik, ausgestattet oder ganz daraus gefertigt.

Am und nahe dem Werkstück sind vorrangig Verschleißbeständigkeit, Thermoschockfestigkeit und Warmhärte gefordert. Generell ist Dauerfestigkeit bezüglich schwellender Torsion und Biegung gefordert. Es sind unterschiedliche Material-Zusammensetzungen /-Verteilungen und Ausführungsformen denkbar.

Insbesondere eine für Fa. BOEHLERIT geschützte Stoffmischung mit großem Anteil von feinstkörnigem Wolframkarbid und/oder kubischen BN und die Standfestigkeit erhöhenden Zusätzen anderer Stoffe, in besonderem BOEHLERIT- Verfahren von BOEHLERIT hergestellt, kann für RPS- Werkzeuge zum Einsatz kommen.

Das Werkzeug, genauer gesagt Stift und Hülse, gegebenenfalls auch der Stempel, kann aus Warmarbeitsstahl oder aus Kaltarbeitsstahl oder Wolfram-Rhenium WRe -Legierung oder aus sogenanntem Hartmetall (Karbide in Metallmatrix) oder aus Metall-Keramik-Verbundwerkstoffen (CERMET) oder aus Kombinationen genannter Werkstoffe bestehen, oder aus Kombinationen von Nickellegierungen (Superlegierungen) mit Hartmetall oder aus pulvermetallurgischen Stählen mit angefügtem Hartmetall oder aus pulvermetallurgischen Stählen mit im Werkstoff-Kontinuum in zweckmäßiger örtlich unterschiedlicher Konzentration verteiltem Hartmetall- oder Keramikpulver.

Die nicht direkt mit dem Werkstück in Kontakt tretenden Werkzeugpartien können alternativ aus Nicht-Werkzeugstahl (Vergütungsstahl oder Einsatzstahl oder ferritischem nichtrostendem oder stark kaltverformtem austenitischen nichtrostendem Stahl) bestehen.

Hinzukommen kann Oberflächenbeschichtung als Hartstoffe im PVD -Verfahren
(http://de.wikipedia.org/wiki/Physikalische_Gasphasenabsche idung)
z. B. Titanaluminiumnitrid TiAlN oder Chromnitrid CrN oder ZOX (Zirkonxid-haltig) für Anwendung an Leichtmetall-Werkstücken;
oder mit Hartstoffen im PVD -Verfahren
(http://www.haertetechnik.org/index.php?cid=124&sid=4&m=&PH PSESSID=b72caaa2c2156a0886da62108cac1c3c)
für Anwendung bevorzugt aber nicht ausschließlich an Schwermetall-Werkstücken;
oder Hartstoffe im CVD -Verfahren, z.B. Titankarbid TiC oder Titannitrid TiN;
oder mit Oxidkeramiken, z.B. Aluminiumoxid A1203 sowie nicht- oxidischen Keramiken, z.B. Siliziumkarbid SiC, Siliziumnitrid hochrein, Zirkondioxid ZiO2, letzteres auch mit beigemischtem Yttriumtrioxid Y2O3 für Anwendung bevorzugt aber nicht ausschließlich an Schwermetall-Werkstücken;
oder mit erwähnter Beschichtung oder einer Plasmanitrierschicht oder Salzbadnitirierschicht.

Der Werkzeugsatz ist prinzipbedingt dreiteilig und achsenkonzentrisch. Einerseits müssen bei Anwendung an metallischen Werkstücken hohe Andruckkräfte, Reibmomente und Drehzahlen (Leistung) aufgebracht werden. Andererseits werden vom Anwender möglichst wandnah platzierte RPS-Punkte z.B. an gekanteten Werkstücken gefordert. Blechfalz wird bei PKW-Karosserien als ,,totes" Material (unnötige Masse, Biegespannungen und Bauraum sowie Materialkosten) angesehen. Es sind daher auf Schlankheit optimierte Werkzeuge gefordert, um zum Beispiel mit Laserschweißen konkurrieren zu können, das keinerlei Falz benötigt.

Um auch für diesen Zweck geringe Stiftdurchmesser zu ermöglichen, ist bei einer vorteilhaften Ausführungsform vorgesehen, dass der Stift in einem Abstand vom werkstückseitigen Ende mit einer Schiebepassung an der inneren Oberfläche der Hülse abgestützt ist.

Um Knicken zu verhindern, kann auch eine ein- oder mehrfache radiale Abstützung von Stift und Hülse durch Schiebepassung des Stifts in der Hülse bzw. ein rotierender Gleitsitz der Hülse im Stempel, alternativ als Gleitlager vorgesehen sein.

Bei einer anderen vorteilhaften Ausführungsform ist vorgesehen, dass durch Erhöhung des Kühlflüssigkeitsdrucks Stift und/oder Hülse in Axialrichtung bewegbar sind.

Es kann eine Kühlflüssigkeits-Austrittsbohrung am werkstückseitigen Stiftende angeordnet sein. Der Stift und/oder die Hülse kann mit Durchgangsbohrungen versehen sein, durch die die Kühlflüssigkeit hindurch gelangen kann.

Bei einer anderen vorteilhaften Ausführungsform ist vorgesehen, dass die werkstückseitigen Dichtungen zum Durchlassen einer geringen Menge von Kühlflüssigkeit ausgebildet sind, um so Kühlung des Werkstücks zu ermöglichen. Die Kühlung kann dabei auch durch Verdampfen erfolgen.

Bei einer vorteilhaften Ausführungsform ist vorgesehen, dass durch Erhöhung des Kühlflüssigkeitsdrucks Stift und/oder Hülse in Axialrichtung bewegbar sind. Dies kann einerseits zum Bewirken oder Erhöhen des Anpressdrucks und andererseits zum Lösen des Werkzeugs vom Werkstück verwendet werden. Diese hydraulische Ausführungsform erleichtert das Auswechseln des Werkzeugs.

Zweckmäßigerweise ist ein geschlossener Kreislauf für die Kühlflüssigkeit vorgesehen. Als Kühlflüssigkeit dient vorzugsweise Wasser oder eine Wasser-Glykol-Mischung (,,Kühler-Frostschutzmittel") oder Wasser mit Fettalkohol und Additiven (Korrosionsschutzmittel, chemische Stabilisatoren, Reibungsminderer). Auch ein reibungsmindender Zusatz wie zum Beispiel hexagonales BN ist sehr zweckmäßig. Weiter ist zweckmäßigerweise eine Drehdurchführung für Kühlflüssigkeit für Zuführung hin zu Stempel, Hülse und Stift und wieder hinaus zum Tank oder Abfluss, im offenen oder geschlossenen Kreis, mit oder ohne zusätzlichen Wärmeentzug vorgesehen.

Zweckmäßigerweise ist weiter vorgesehen, dass das Reibpunktschweißwerkzeug einen fluidgekühlten Gegenhalter aufweist.

Die beim RPS-Vorgang im RPS-Punkt erzeugte Wärme breitet sich im Werkstück aus und fließt auch in den Gegenhalter, der sich von RPS- Punkt zu RPS- Punkt zunehmend erwärmt bei gleichmäßigen RPS- Intervallen.

Entsprechend unterschiedlich ergeben sich die Festigkeitseigenschaften der RPS -Punkte am Anfang im Vergleich zu späteren RPS-Punkten, was sehr unerwünscht ist.

Dem wirkt ein mittels Flüssigkeit, vorzugsweise Wasser oder Wasser-Glykol-Mischung, gekühlter Gegenhalter entgegen. Das im Werkzeugkontakt befindliche Andruckstück des Gegenhalters besteht aus gut Wärme leitendem, vom Kühlfluid intern bespültem Material, vorzugsweise einer Kupferlegierung. Wärme aus dem Werkstück tritt mittels Wärmeleitung in das Andruckstück über und weiter in das Kühlfluid. In einer anderen Ausführung benetzt das Kühlfluid direkt das Werkstück, indem eine Dichtung das Ausströmen in die Umgebung ganz oder teilweise verhindert. In einer anderen Ausführung benetzt das Kühlfluid direkt das Werkstück ohne eine dortige Dichtung, in minimaler aber eben ausreichender Menge, die auch teilweise oder gänzlich am Werkstück verdampfen kann. In einer anderen Ausführung wird als Kühlmedium CO₂ eingesetzt.

Zwecks Erhöhung der Aufstandsfläche des Werkzeugsatzes auf dem Werkstück kann ein viertes, den Stempel konzentrisch umgebendes hülsenartiges Werkzeugteil vorgesehen sein. Damit wird der Druck des Werkzeugsatzes auf das Werkstück auf eine größere Kreisfläche verteilt, insbesondere Werkstücke aus Leichtmetall werden dort weniger plastisch verformt (geprägt). Nachteilig ist dann der entsprechend verringerte geringstmögliche Wandabstand. Auch dieses Werkzeugteil kann mit Flüssigkeitskühlung ausgestattet sein.

Eine vorteilhafte Ausführungsform zeichnet sich dadurch aus, dass das Reibpunktschweißgerät mit Einrichtungen zur stoßartigen und kurzzeitigen Erhöhung der Kraft versehen ist, mit der Werkzeug und Werkstück zusammengedrückt werden. Die Erfindung hat erkannt, dass der Eintrag mechanischer Energie in die Schweißstelle - und damit die Wirksamkeit des Werkzeugsatzes - nicht nur durch erhöhte Temperatur bei verminderten Wärmeabfluss verbessert werden kann, sondern auch durch Erhöhung dieser Kraft. Die Verbindungsfestigkeit wird dabei durch Maximierung der innerkristallinen sowie zwischenkristallinen Bindungen im Werkstück erreicht, mikroskopische Lücken wie Hohlräume, Risse und O-xideinschlüsse werden minimiert. Die erhöhte Kraft braucht aber nur kurzzeitig ausgeübt zu werden, was vielfältige Vorteile hat.

Durch die Einrichtungen zur kurzzeitigen Erhöhung der Kraft wird die für die Erhöhung der Qualität der Schweißstelle große Kraft aufgebracht und gleichzeitig auch eine entsprechend hohe Temperatur erreicht.

Zur Erzeugung der kurzeitigen Kraft werden entweder Teile des Werkzeugsatzes oder Teile des Gegenhalters oder beide solche zugleich impulsartig gegen das Werkstück beschleunigt unter Nutzung gespeicherter Energie. Diese Ausführungsformen sind besonders vorteilhaft bei einem zangenartigen Reibpunktschweißgerät mit einer C-förmigen Ausnehmung zum Umgreifen des Werkstücks anzuwenden, das einen Gegenhalter aufweist, der mit Einrichtungen zum Ausüben einer Gegenkraft versehen ist, deren zeitlicher Verlauf und Größe der kurzzeitig erhöhten Kraft entspricht. Es wird so auf das Werkstück von beiden Seiten der gleiche Kraftbetrag zunächst statisch, zuletzt stoßartig ausgeübt (actio = reactio), so dass der Nettorückstoß des Reibpunktschweißgeräts gering, theoretisch sogar 0 ist. Damit erfährt das Werkstück nahezu keine Verschiebung oder beulenartige Verformung.

Während der Ausübung der erhöhten stoßartigen Kraft sollte sich das Werkzeug nicht mehr drehen. Zu diesem Zweck könnte man den Antrieb für die Welle kurz vor Ausüben der stoßartigen Kraft ausschalten und Welle und Werkzeug dann durch die Reibung abbremsen, die während der erhöhten Kraft auftritt.

Oder man trennt kurz vor Ausüben der stoßartigen Kraft die Antriebswelle vom Werkzeug oder den Motor von der werkzeugseitigen Welle, vermindert damit das zu bremsende Massenträgheitsmoment.

Bei einer vorteilhaften Ausführungsform sind aber Einrichtungen zur schlagartigen Beendigung der Drehbewegung der Welle vorgesehen. D.h., die vom Motor entkoppelte oder nicht entkoppelte Welle oder der Motor mit angekoppelter Welle wird abgebremst, bevor die erhöhte Kraft aufgewendet wird.

Bei einer vorteilhaften Ausführungsform weist das Reibpunktschweißgerät zu beschleunigende Massen zum Ausüben der kurzzeitig erhöhten Kraft auf. Diese wirken in ähnlicher Weise wie ein Hammerschlag. Dabei können insbesondere spannbare mechanische oder Gasdruck-Federelemente zum Ausüben der kurzzeitig erhöhten Kraft vorgesehen sein.

Durch entsprechende Maßnahmen, gegebenenfalls zeitliche Steuerung, kann erreicht werden, dass entweder das Werkzeug den Impuls erhält und in Folge den Druck auf das Werkstück erhöht oder aber der Gegenhalter die stoßartige Kraft ausübt, oder indem Werkzeug und Gegenhalter gegeneinander gleichzeitig auf das Werkstück beschleunigt werden.

Auf jeden Fall wird zu der hohen statische Zangenschließkraft gegen Ende des Reibpunktschweißvorganges eine kurzzeitig erhöhte Kraft oder eine Impulsfolge hinzugefügt oder erstere durch letztere ersetzt, um dadurch die Qualität der Schweißstelle zu verbessern.

Beim Rührreibpunktschweißen an Al-Werkstücken dringt zunächst die Hülse drehend-reibend in das Werkstück ein und verdrängt Werkstückmaterial, für das der Stift dem verdrängten Volumen durch Zurückweichen Raum gibt. Dann wird die Hülse zurückgezogen, der Stift dringt vor und führt das o.g. verdrängte Material zurück in das Werkstück.

Bei Anwendung an Stahl-Werkstücken ist der Fließwiderstand sehr viel höher, daher muss der Stift mit extremer Kraft beaufschlagt werden. Vorteilhafterweise wird daher der Stift mit einem oder mehreren Kraftpulsen ähnlich Hammerschlägen beaufschlagt um das verdrängte Werkstückmaterial zurück in das Werkstück - eben mit der Werkstückoberfläche abschließend - zu treiben.

Die auszuübenden Kräfte können reduziert werden, wenn das Reibpunktschweißgerät mit Einrichtungen zur Erwärmung des Werkstücks versehen ist. Es wird dann also nicht nur die Reibungswärme verwendet sondern auch eine zusätzliche Erwärmung des Werkstücks. Solche kann induktiv oder konduktiv (durch Ohm'schen Widerstand des Werkstückes) oder mittels Gasbrenner-Flamme oder Laser oder zusätzliches Reibelement oder kombiniert erfolgen.

Vorteilhafterweise besteht beim Reibpunktschweißgerät der Erfindung das Werkzeug oder - kostengünstiger - nur der mit dem Werkstückmaterial in Kontakt kommende Teil des Werkzeuges aus einem temperaturbeständigen Hartstoff, möglichst mit geringer Wärmeleitfähigkeit, insbesondere geringerer Wärmeleitfähigkeit als Stahl, um eine übermäßige Abkühlung zu vermeiden. Damit kann dann nicht nur z.B. Aluminium verschweißt werden, sondern auch Stahl, was Temperaturen von über 900 °C erfordert. Vorrangig gegenüber der möglichst geringen Wärmeleitfähigkeit sind aber die Warmfestigkeit, insbesondere die Wärmeschockbeständigkeit, und die Verschleißbeständigkeit.

Um eine übermäßige Abkühlung zu vermeiden wird bei einer vorteilhaften Ausführungsform vorgesehen, dass zumindest die mit dem Werkstück in Berührung kommenden Teile des Gegenhalters aus einem Material mit geringer, insbesondere geringerer Wärmeleitfähigkeit als Stahl bestehen. Falls z.B. die Streuung der RPS-Punktqualität minimiert werden muss, kann, im Gegensatz dazu, auch ein mit Flüssigkeitskühlung ausgestatteter Gegenhalter eingesetzt werden, der besonders wirksam Wärme aus dem RPS-Punkt und/oder dessen Umgebung entzieht.

Eine andere Möglichkeit, die Streuung der RPS-Punktqualität zu minimieren, ist, den Gegenhalter mittels geregelter Energiezufuhr auf möglichst konstanter Temperatur zu halten. Dadurch können Unterschiede in der RPS-Punktqualität zu mindest sehr verringert werden, die dadurch entstehen, dass sich bei nahe liegenden Schweißpunkten das Werkstück erwärmt und daher die späteren Schweißpunkte unter anderen Bedingungen als die früheren erzeugt werden.

Viele Materialien neigen dazu, bei der erhöhten Temperatur des Schweißens eine Oxidschicht zu bilden. Um dies zu vermeiden, kann das Reibpunktschweißgerät mit Schutzgaseinrichtungen versehen sein.

Bessere Schweißverbindungen erhält man auch, wenn man die Andrückkraft von Stift oder Hülse am Ende des Schweißvorgangs stoßartig und kurzzeitig erhöht. Die stoßartige Kraft kann dabei durch den Stift, die Hülse oder den Gegenhalter ausgeübt werden. Vorteilhafterweise werden die stoßartigen Kräfte dabei von beiden Seiten auf das Werkstück aktiv ausgeübt. Die entsprechenden Einrichtungen zur Krafterhöhung können dabei auch entfernt vom Werkzeug, insbesondere in der Maschine angeordnet sein.

Die Erfindung im Folgenden anhand einer vorteilhaften Ausführungsform unter Bezugnahme auf die beigefügten Zeichnungen beispielsweise beschrieben. Es zeigen:
- Fig. 1: Anwendungsmöglichkeiten des erfindungsgemäßen Reibpunktschweißwerkzeugs;
- Fig. 2: Aufnahmen von mit dem erfindungsgemäßen Reibpunktschweißwerkzeug erzeugten Schweißungen;
- Fig. 3: im Querschnitt das werkstückseitigen Ende eines erfindungsgemäßen Reibpunktschweißwerkzeugs; und
- Fig. 4: in ähnlicher Darstellung wie in Figur 31 andere Ausführungsform.

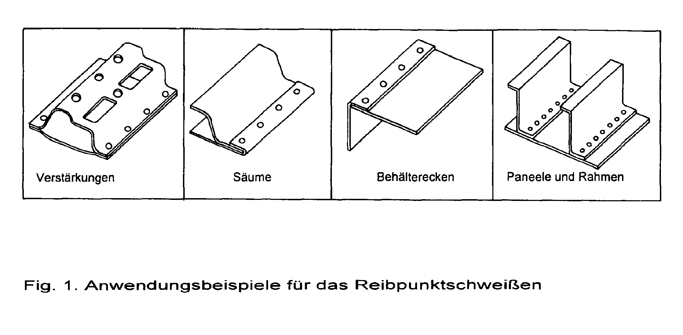

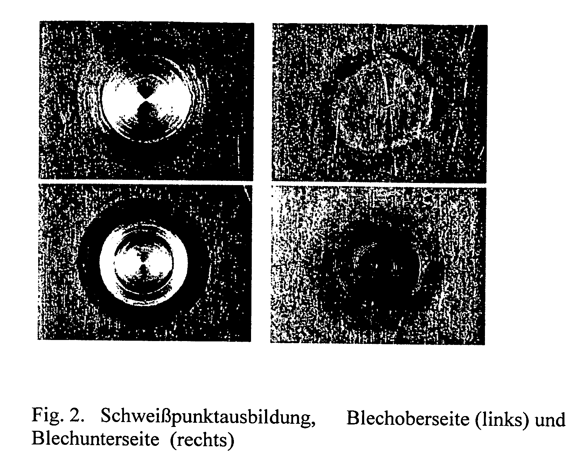

Beispiele für Anwendungsmöglichkeiten des erfindungsgemäßen Reibpunktschweißwerkzeugs sind in Fig. 1 gezeigt. Fig. 2 zeigt typische Oberflächen von Blechen mit Schweißverbindungen, die mit dem Werkzeug hergestellt worden sind.

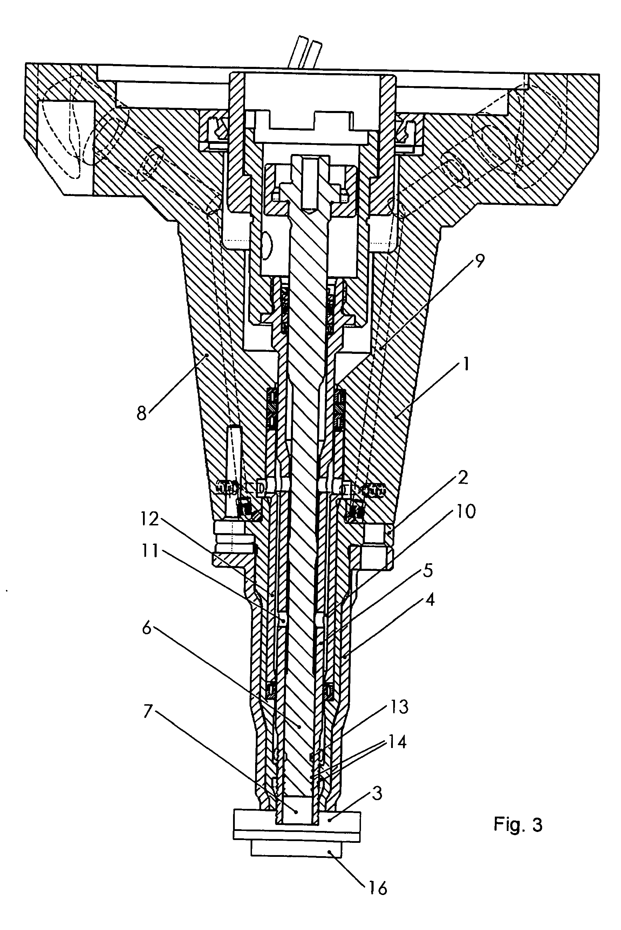

Fig. 3 zeigt das werkstückseitige Ende eines erfindungsgemäßen Reibpunktschweißwerkzeugs. An einem Halter 1 ist ein Stempel 2 befestigt, der zum Andrücken des Reibpunktschweißwerkzeugs an das Werkstück 3 ausgebildet ist. Der Stempel 2 ist von einem Andrückstempel 4 zur Vergrößerung der Fläche umgeben, mit der das Werkzeug gegen das Werkstück 3 drückt. Auf diesen Andrückstempel 4 wird man verzichten, wenn auf beengtem Raum etwa in der Nähe einer Abkantung geschweißt werden soll.

Im Stempel 2 ist in Axialrichtung verschiebbar und drehbar eine Hülse 5 angeordnet, die einen Stift 6 umgibt, der ebenfalls in Axialrichtung verschiebbar und mit der Hülse 5 zusammen drehbar ist. Wie dies in Fig. 3 gezeigt ist, ist die Hülse 5 bereits teilweise mit entsprechender Rotation in das Werkstück 3 hinein bewegt und wird anschließend soweit weiter bewegt, bis sie auch in die untere Schicht des Werkstücks 3 eintritt. Das durch die Erwärmung infolge der Drehung plastifizierte Material des Werkstücks 3 weicht dabei in den Raum 7 innerhalb der Hülse 5 und unterhalb des Stifts 6 aus. Anschließend wird dann der Stift 6 nach unten und die Hülse 5 nach oben bewegt, so dass das plastifizierte Material in das entstandene Loch zurückbewegt wird und so eine Schweißung mit im Wesentlicher glatter Oberfläche hergestellt wird.

Die Kühlflüssigkeit wird durch Kanäle 8, 9 zum unteren Bereich des Werkzeugs zugeführt und von dort abgeführt. Insbesondere umspült die Kühlflüssigkeit bei 10 die Hülse 5 und dringt durch Bohrungen 11 bis zum Stift 6 vor, um auch diesen direkt zu kühlen. Mit 12 ist ein Füllkörper bezeichnet, der zwischen Hülse 5 und Stempel 2 angeordnet ist.

Der Stift 6 ist mit enger Passung in der Hülse 5 geführt. Dies stellt eine wirksame Dichtung für die Kühlflüssigkeit dar. Das plastifizierte Material kann aufgrund dieser engen Passung nur in sehr geringem Umfang in den Spalt zwischen Stift 6 und Hülse 5 gelangen. Geringe Mengen des Materials werden dabei in Materialsammelräumen 13, 14 angesammelt. Die Ansammlung ist dabei so gering, dass diese Materialsammelräume erst gefüllt sind, wenn das Werkzeug verschlissen ist und ausgewechselt werden muss. Der von Stempel 2, Hülse 5 und Stift 6 ausgeübte Druck wird durch einen Gegenhalter 16 aufgefangenen, der mit Flüssigkeit gekühlt wird.

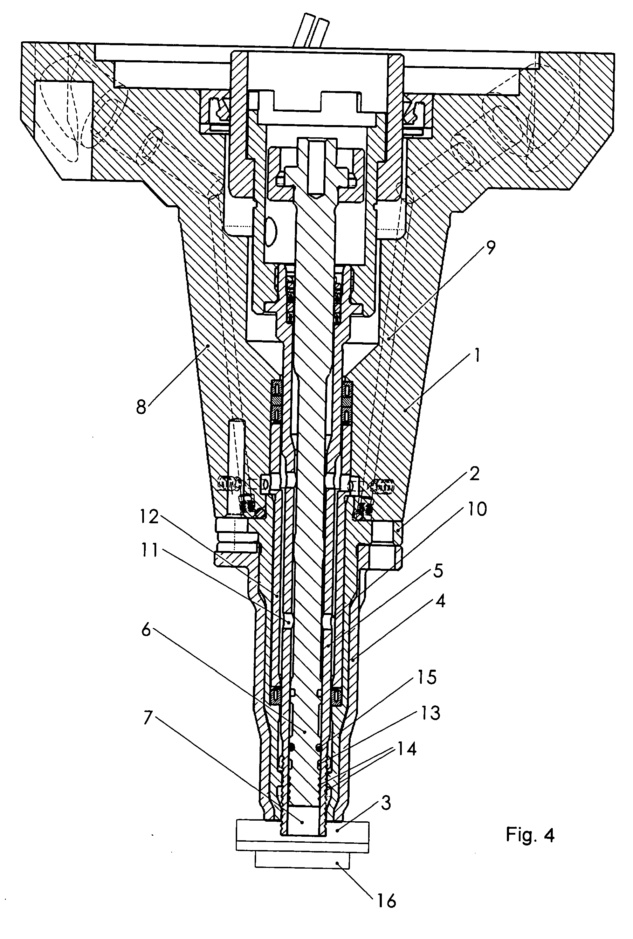

Die Ausführungsform der Fig. 4 unterscheidet sich von derjenigen der Fig. 3 dadurch, dass statt der engen Passung die Dichtwirkung durch einen Dichtring 15 bewirkt wird.

## Patentansprüche

1. Reibpunktschweißwerkzeug zum Verbinden von flächigen Werkstücken (3) an Stellen, an denen sie überlappen, mit einem gegen die Werkstücke drückbaren Stempel (2) und einem darin angeordneten Stift (6) sowie einer denselben konzentrischen umgebenden Hülse (5), die im Stempel (2) unabhängig voneinander axial bewegbar sind, wobei der Stift (6) und/oder die Hülse (5) in Drehung versetzbar sind, **dadurch gekennzeichnet, dass** das Reibpunktschweißwerkzeug mit Kanälen und Hohlräumen (8, 9, 10) für Kühlung von Stift (6), Hülse (5) und Stempel (2) mit einer Kühlflüssigkeit versehen ist, die zumindest den Stift (6) und die Hülse (5) direkt umspült, und dass werkzeugseitige und werkstückseitige Dichtungseinrichtungen (15) vorgesehen sind, durch die das Austreten der Kühlflüssigkeit zwischen Stift (6), Hülse (5) und Stempel (2) zumindest stark behindert wird.

2. Reibpunktschweißwerkzeug nach Anspruch 1, **dadurch gekennzeichnet, dass** der Stempel (2) aus zwei konzentrischen Teilen besteht, die zwischen sich einen Hohlräume und Durchtrittskanäle für die Kühlflüssigkeit einschließen.

3. Reibpunktschweißwerkzeug nach Anspruch 1 Oder 2, **dadurch gekennzeichnet, dass** die Dichtungseinrichtungen Ring-Dichtungen (15) aufweisen.

4. Reibpunktschweißwerkzeug nach einem der Ansprüche 1 bis 3, **dadurch gekennzeichnet, dass** die Dichtungseinrichtungen Kapillardichtspalte zwischen Stift (6), Hülse (5) und Stempel (2), vorzugsweise nur zwischen Stift (6) und Hülse (5), optional zusätzlich zwischen Stempel(2) und Andrückstempel (4) aufweisen.

5. Reibpunktschweißwerkzeug nach einem der Ansprüche 1 bis 4, **dadurch gekennzeichnet, dass** maschinenseitig doppelte oder im Vergleich zu den werkstückseitigen Dichtungen mehrfache oder sicherer wirkende Dichtungen vorgesehen sind.

6. Reibpunktschweißwerkzeug nach einem der Ansprüche 1 bis 5, **dadurch gekennzeichnet, dass** am werkstückseitigen Ende Ringnuten (13, 14) oder Gewinde am Umfang von Stift (6) und/oder Hülse (5) vorgesehen sind.

7. Reibpunktschweißwerkzeug nach einem der Ansprüche 1 bis 6, **dadurch gekennzeichnet, dass** die werkstückseitigen Enden von Stift (6) und/oder Hülse (5) oberflächenbehandelt sind.

8. Reibpunktschweißwerkzeug nach Anspruch 7, **dadurch gekennzeichnet, dass** die werkstückseitigen Enden mit einer oder mehreren verschleißmindernden Oberflächenschicht(en) beschichtet sind.

9. Reibpunktschweißwerkzeug nach einem der Ansprüche 1 bis 8, **dadurch gekennzeichnet, dass** im Bereich der Dichtungen auf Stift (6), Hülse (5) und Stempel (2) eine DLC-Schicht (diamond-like carbon, diamantartiger Kohlenstoff) oder eine ZOX- Schicht (Zirkonoxid-haltig) oder eine TiAlN-Schicht aufgebracht ist.

10. Reibpunktschweißwerkzeug nach einem der Ansprüche 1 bis 9, **dadurch gekennzeichnet, dass** der Stift (11) Bohrungen für Zufuhr oder Abfuhr der Kühlflüssigkeit aufweist.

11. Reibpunktschweißwerkzeug nach einem der Ansprüche 1 bis 10, **dadurch gekennzeichnet, dass** Stift (6), Hülse (5) und/oder Stempel (2) ganz oder zum Teil aus Hartmetall oder nichtmetallischem Hartstoff, insbesondere Keramik bestehen.

12. Reibpunktschweißwerkzeug nach einem der Ansprüche 1 bis 11, **dadurch gekennzeichnet, dass** der Stift (6) in einem Abstand vom werkstückseitigen Ende mit einer Schiebepassung an der inneren Oberfläche der Hülse (5) abgestützt ist.

13. Reibpunktschweißwerkzeug nach einem der Ansprüche 1 bis 12, **dadurch gekennzeichnet, dass** es so ausgebildet ist, dass durch Erhöhung des Kühlflüssigkeitsdrucks Stift (6) und/oder Hülse (5) in Axialrichtung bewegbar sind.

14. Reibpunktschweißwerkzeug nach einem der Ansprüche 1 bis 13, **dadurch gekennzeichnet, dass** die werkstückseitigen Dichtungen (15) zum Durchlassen einer geringen Menge von Kühlflüssigkeit ausgebildet sind.

15. Reibpunktschweißwerkzeug nach einem der Ansprüche 1 bis 14, **dadurch gekennzeichnet, dass** es einen Gegenhalter (16) mit Einrichtungen zur Beeinflussung von dessen Temperatur aufweist.

16. Reibpunktschweißwerkzeug nach einem der Ansprüche 1 bis 15, **dadurch gekennzeichnet, dass** es mit Einrichtungen zum stoßartigen und kurzzeitigen ein- oder mehrmaligen Erhöhen der Kraft versehen ist, mit der der Stift(6) und/oder die Hülse (5) gegen die Werkstücke (3) gedrückt wird.

17. Reibpunktschweißwerkzeug nach Anspruch 16, **dadurch gekennzeichnet, dass** es zu beschleunigenden Massen zum Ausüben der kurzzeitig erhöhten Kraft aufweist.

18. Reibpunktschweißwerkzeug nach Anspruch 16, **dadurch gekennzeichnet, dass** es spannbare mechanische oder Gasdruck-Federelemente zum Ausüben der kurzzeitig erhöhten Kraft aufweist.
